# EUROPEAN PATENT SPECIFICATION

(11) **EP 2 413 717 B1**
(45) Date of publication and mention of the grant of the patent: **04.06.2014**
(21) Application number: 10736860.7
(22) Date of filing: 30.03.2010
(51) Int. Cl.: A23L 1/09, A23L 1/236, A23G 1/32, A23G 1/40

(54) **DIETARY CHOCOLATE COMPOSITIONS AND PRODUCTION METHOD THEREOF**
DIÄTSCHOKOLADEZUSAMMENSETZUNGEN UND IHRE HERSTELLUNG
COMPOSITIONS DE CHOCOLAT DIÉTÉTIQUE ET PROCÉDÉ DE PRODUCTION ASSOCIÉ

(30) Priority: 01.04.2009 TR 200902522
(43) Date of publication of application: 08.02.2012
(73) Proprietor: Sanset Gida Turizm Sanayi Ve Ticaret Anonim Sirketi, 34460 Sariyer/ Istanbul (TR)
(72) Inventor: TOKSOZ, Zafer, 34398 Istanbul (TR); ACAR, Emine, 52200 Ordu (TR)
(74) Representative: Sevinç, Erkan
(86) International application number: PCT/TR2010/000069
(87) International publication number: WO 2010/117344

(56) References cited:
- WO-A-93/02566
- RO-B1- 121 666
- US-A1- 2004 086 615
- US-A1- 2007 082 104
- HARTEL R W ET AL: "Polyols and bulking agents in sugarfree chocolate" MANUFACTURING CONFECTIONER,, vol. 81, no. 6, 1 January 2001 (2001-01-01), pages 81-92, XP009105856 ISSN: 0025-2573

## Description

### Field of Invention

The present invention relates to newly-developed dietary chocolate compositions.

The present invention more particularly relates to a sweetener composed of fructose, inulin, and erythrol, with reduced calorie and lower glycemic index, wherein the post-consumption cooling effect caused by erythrol in mouth is eliminated.

### Prior Art

Conventional chocolate products have high calorie content and high glycemic index. Nowadays, during which the consumer nutritional habits are gradually oriented towards more healthy products, there are available various confectionary and chocolate products with reduced calorie and lower glycemic index.

Fructose, inulin, and erythrol are used as sweeteners in such products.
Fructose is a sugar of formula C6H12O6. It is also known as levulose or fruit sugar. It is a ketohexose. Fructose is present in some fruits and honey.

Inulin is a natural polysaccharide present in various plants. It is of the fibrous class and is known as fructan.
Erythrol is a sugar alcohol used as a sugar substitute. It has reduced calorie as compared to sugar. Various foodstuffs containing erythrol causes post-consumption cooling effect in the mouth. The cause of this is the excessively lower dissolution temperature (-180°C) of erythrol.

This cooling effect removes the classical taste of chocolate, this fact not satisfying the taste of conventional chocolate consumers.

Various applications are present in the prior art for removing the cooling effect.

In the application US6875460, the cooling effect is removed by means of maltodextrine. The high glycemic content of maltodextrine, however, is an unwanted fact. The effect caused by maltodextrine, on the other hand, is not satisfactory.

US 2004/086615-A1 discloses chocolate compositions comprising erythritol and inulin wherein inulin and related fructo-oligosaccharides are particularly shown to be useful in offsetting the cooling effect of erythritol. This document further recites that although inulin can help to offset the cooling effect of the erythritol, the mouthfeel of the composition may degrade as a result of higher fiber content, and eventually proposed is fructo-oligosaccharides with a lower average degree of polymerization as well as further ingredients such as cocoa liquor and isomalt for suppressing cooling effect of erythritol.

RO 121 666 B1 discloses a chocolate composition comprising a cream base and various sugars and sweeteners including fructose. The compositions according to this document are described to have a cooling effect which is not desired.

In the application WO2004/040994, such cooling effect is eliminated by means of using a composition containing polydextrose. The high hygroscopic structure of polydextrose, however, brings about various difficulties during the manufacture stage.

In brief, there is a need towards a novelty to provide desired taste and quality in the art of chocolate compositions with reduced calorie and low glycemic index, because of the drawbacks referred to hereinabove.

### Object and Brief Description of Invention

The present invention relates to a novel chocolate composition with reduced calorie and low glycemic index, eliminating all aforesaid problems and bringing additional advantages to the relevant prior art.

Accordingly, the main object of the present invention is to obtain a chocolate composition with reduced calorie and high glycemic index.

Another object of the present invention is to obtain a chocolate composition, which masks the cooling effect caused by the sweetener erythrol to a desired level.

In order to achieve the aforesaid objectives and those to emerge below in the detailed description, a novel dietary chocolate composition is realized, containing a sweetener mixture with reduced calorie and lower glycemic index.

According to the present invention, this novelty is realized by means of 1-4% erythrol by weight, 1-75% inulin by weight, 1-40% fructose by weight, and at least one or a mixture of hazelnut, hazelnut puree, and hazelnut flour components in an amount of 1-60% by weight. Thus, hazelnut produces a synergistic effect with the sweetener composition, thereby maximizing the masking of the cooling effect caused by erythrol.

Introduction of the aforementioned mixture with defined proportions, not only a composition is obtained with reduced calorie and low glycemic index, but also the cooling effect of erythrol is excellently masked.

In a preferred embodiment of the present invention, the ratio of hazelnut to erythrol, inulin, and fructose varies between 60:1 and 1:60.

In another preferred embodiment of the present invention, erythrol is present in an amount of 5 to 40% by weight.

In another preferred embodiment of the present invention, erythrol is present in an amount of 8 to 24% by weight.

In another preferred embodiment of the present invention, inulin is present in an amount of 5 to 63% by weight.

In another preferred embodiment of the present invention, inulin is present in an amount of 21 to 40% by weight.

In another preferred embodiment of the present invention, fructose is present in an amount of 2 to 35% by weight.

In another preferred embodiment of the present invention, fructose is present in an amount of 3 to 21% by weight.

In another preferred embodiment of the present invention, the ratio of fructose and inulin varies between 10:1 and 1:10 (fructose : inulin).

In another preferred embodiment of the present invention, at least one or a mixture of cacao, cacao oil, and cacao liquor components is added in an amount of 5-20% by weight.

In another preferred embodiment of the present invention, at least one or a mixture of dry milk products is added in an amount of 2-30% by weight.

The present invention further contains vegetable oil in a preferred embodiment. Said oil is selected from the group consisting of cacao oil, hazelnut oil, sunflower oil coconut oil components, or a mixture thereof.

According to a preferred embodiment, the present invention contains lecithin as an emulsifying agent.

According to a preferred embodiment, the present invention contains vanilla as an aroma.

According to the preferred embodiment of the present invention, said chocolate composition is realized in the forms of creamy chocolate, milk chocolate, bitter chocolate, and filled chocolate.

According to a preferred embodiment of the present invention, the dietary chocolate composition contains the followings only:
- erythrol at 8-24% by weight,
- inulin at 21-65% by weight,
- fructose at 3-21 % by weight,
- hazelnut puree at 5-40% by weight.

According to a preferred embodiment of the present invention, said dietary chocolate composition is produced by means of a method, comprising the steps of
- mixing erythrol, fructose, and inulin,
- adding hazelnut puree to the mixture, and mixing the resultant mixture, and
- grinding the finally-resulting mixture.

### Detailed Description of Invention

### Example 1: Hazelnut Cream

| Content | Amount (% by weight) |
|---|---|
| Erythrol | 8 - 24 |
| Inulin | 21 - 63 |
| Fructose | 3 - 21 |
| Hazelnut puree | 5 - 40 |
| Cacao products | 1 - 35 |
| Milk products | 2 - 30 |
| Vegetable oil | 28 - 40 |
| Lactose | 0 - 7 |
| Vanilla | 0 - 2 |

### Example 2: Hazelnut-filled Bitter Chocolate

| Content | Amount (% by weight) |
|---|---|
| Erythrol | 8 - 24 |
| Inulin | 21 - 63 |
| Fructose | 3 - 21 |
| Hazelnut or puree thereof | 10 - 30 |
| Cacao products | 1 - 45 |
| Milk products | 0 - 5 |
| Vegetable oil | 28 - 40 |
| Lactose | 0 - 7 |
| Vanilla | 0 - 2 |

### Example 3: Hazelnut-filled Milk Chocolate

| Content | Amount (% by weight) |
|---|---|
| Erythrol | 8 - 24 |
| Inulin | 21 - 63 |
| Fructose | 3 - 21 |
| Hazelnut or puree thereof | 10 - 30 |
| Cacao products | 1 - 45 |
| Milk products | 5 - 30 |
| Vegetable oil | 28 - 40 |
| Lactose | 0 - 7 |
| Vanilla | 0 - 2 |

According to these examples, the present invention is conducted as following. The mixture of erythrol, fructose, and inulin is finely mixed and homogenized by means of a mixer. This mixture masks the erythrol-caused cooling effect. Then, a previously-grinded hazelnut puree is added to this mixture. The resulting mixture is grinded and mixed back so as to be homogenized. This process allows to maximally mask the cooling effect of erythrol and the hazelnut aroma provides a synergistic contribution.

To the preferably pre-ground mixture is added a liquid mixture composed of cacao powder, dry milk products, vanilla if required, and vegetable oil. Then, conching and settling steps are applied to this mixture, whereafter the resultant mixture is prepared for sales, following a filling or shaping process as required by the form of the targeted product. The process steps may be illustrated in the following diagram.

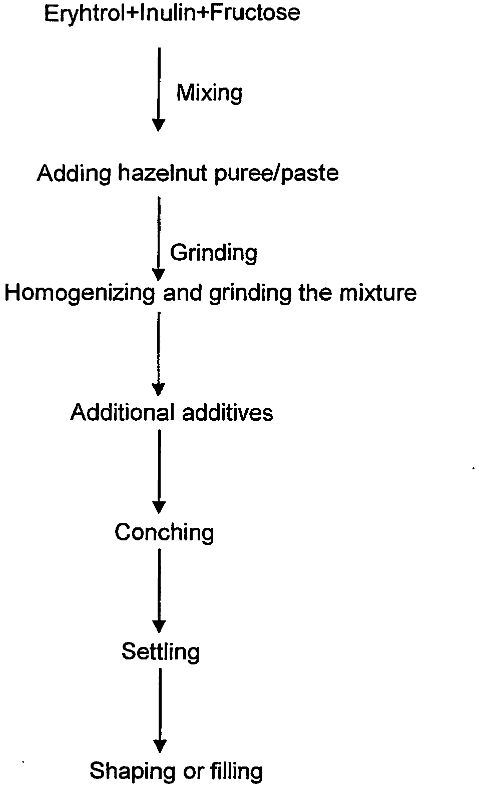

In result, thanks to the embodiment disclosed above, dietary chocolate compositions are obtained, comprising a sweetener mixture with reduced calorie and low glycemic index.

The protection scope of the present invention is set forth in the annexed claims.

## Claims

1. A dietary chocolate composition containing erythrol at 1-40% by weight, inulin at 1-75% by weight and a sweetener mixture with reduced calorie and low glycemic index, **characterized in that** the said composition further comprises,
- fructose at 1-40% by weight and
- at least one or a mixture of the hazelnut, hazelnut puree, and hazelnut flour ingredients in an amount of 1-60% by weight

2. A dietary chocolate composition according to any of the preceding claims, **characterized in that** the ratio of hazelnut to the mixture of erythrol, inulin, and fructose is between 60:1 and 1:60.

3. A dietary chocolate composition according to any of the preceding claims, **characterized in that** erythrol is present in an amount of 5-40% by weight.

4. A dietary chocolate composition according to any of the preceding claims, **characterized in that** erythrol is present in an amount of 8-24% by weight.

5. A dietary chocolate composition according to any of the preceding claims, **characterized in that** inulin is present in an amount of 5-63% by weight.

6. A dietary chocolate composition according to any of the preceding claims, **characterized in that** inulin is present in an amount of 21-40% by weight.

7. A dietary chocolate composition according to any of the preceding claims, **characterized in that** fructose is present in an amount of 2-35% by weight.

8. A dietary chocolate composition according to any of the preceding claims, **characterized in that** fructose is present in an amount of 3-21% by weight.

9. A dietary chocolate composition according to any of the preceding claims, **characterized by** comprising fructose and inulin in a ratio of 10:1 - 1:10 (fructose : inulin).

10. A dietary chocolate composition according to any of the preceding claims, preferably further comprising at least one or a mixture of cacao, cacao oil, and cacao liquor ingredients in an amount of 5-20% by weight.

11. A dietary chocolate composition according to any of the preceding claims, preferably further comprising at least one or a mixture of dry milk products in an amount of 2-30% by weight.

12. A dietary chocolate composition according to any of the preceding claims, preferably further comprising vegetable oil.

13. A dietary chocolate composition according to claims 1 and 5, wherein said oil is at least one or a mixture of cacao oil, hazelnut oil, sunflower oil and coconut oil components.

14. A dietary chocolate composition according to any of the preceding claims, preferably further comprising lecithin as an emulsifying agent.

15. A dietary chocolate composition according to any of the preceding claims, preferably further comprising vanilla as an aroma.

16. A dietary chocolate composition according to any of the preceding claims, **characterized in that** the chocolate composition is in creamy, milk, bitter, or filled forms.

17. A dietary chocolate composition according to any of the preceding claims, comprising the followings only:
- erythrol at 8-24% by weight,
- inulin at 21-63% by weight,
- fructose at 3-21% by weight, and
- hazelnut puree at 5-40% by weight.

18. A method of preparing a dietary chocolate composition according to any of the preceding claims, comprising the steps of
- mixing erythrol, fructose at 1-40% by weight , and inulin,
- adding hazelnut puree in an amount of 1-60% by weight to the mixture, and mixing the resulting mixture, and
- grinding the resultant mixture.

## Patentansprüche

1. Diätschokoladenzusammensetzung, enthaltend 1-40 Gew.% Erythrol, 1-75 Gew.% Inulin und eine Süßstoffmischung mit reduziertem Kaloriengehalt und niedrigem glykämischem Index, **dadurch gekennzeichnet, dass** die Zusammensetzung weiterhin umfasst,
- 1-40 Gew.% Fruktose und
- wenigstens einen Inhaltsstoff, ausgewählt aus Haselnuss, Haselnusspüree und Haselnussmehl, oder eine Mischung davon, in einer Menge von 1-60 Gew.%.

2. Diätschokoladenzusammensetzung nach einem der vorangehenden Ansprüche, **dadurch gekennzeichnet, dass** das Verhältnis von Haselnuss zu der Mischung von Erythrol, Inulin und Fruktose zwischen 60:1 und 1:60 beträgt.

3. Diätschokoladenzusammensetzung nach einem der vorangehenden Ansprüche, **dadurch gekennzeichnet, dass** Erythrol in einer Menge von 5-40 Gew.% vorliegt.

4. Diätschokoladenzusammensetzung nach einem der vorangehenden Ansprüche, **dadurch gekennzeichnet, dass** Erythrol in einer Menge von 8-24 Gew.% vorliegt.

5. Diätschokoladenzusammensetzung nach einem der vorangehenden Ansprüche, **dadurch gekennzeichnet, dass** Inulin in einer Menge von 5-63 Gew.% vorliegt.

6. Diätschokoladenzusammensetzung nach einem der vorangehenden Ansprüche, **dadurch gekennzeichnet, dass** Inulin in einer Menge von 21-40 Gew.% vorliegt.

7. Diätschokoladenzusammensetzung nach einem der vorangehenden Ansprüche, **dadurch gekennzeichnet, dass** Fruktose in einer Menge von 2-35 Gew.% vorliegt.

8. Diätschokoladenzusammensetzung nach einem der vorangehenden Ansprüche, **dadurch gekennzeichnet, dass** Fruktose in einer Menge von 3-21 Gew.% vorliegt.

9. Diätschokoladenzusammensetzung nach einem der vorangehenden Ansprüche, **dadurch gekennzeichnet, dass** sie Fruktose und Inulin in einem Verhältnis von 10:1 - 1:10 (Fruktose:Inulin) umfasst.

10. Diätschokoladenzusammensetzung nach einem der vorangehenden Ansprüche, bevorzugt weiterhin umfassend wenigstens einen Inhaltsstoff ausgewählt aus Kakao, Kakaoöl und Kakaoflüssigkeit, oder eine Mischung davon, in einer Menge von 5-20 Gew.%.

11. Diätschokoladenzusammensetzung nach einem der vorangehenden Ansprüche, bevorzugt weiterhin umfassend wenigstens ein Trockenmilchprodukt oder eine Mischung von Trockenmilchprodukten in einer Menge von 2-30 Gew.%.

12. Diätschokoladenzusammensetzung nach einem der vorangehenden Ansprüche, bevorzugt weiterhin umfassend pflanzliches Öl.

13. Diätschokoladenzusammensetzung nach den Ansprüchen 1 und 5, wobei das Öl wenigstens eines von Kakaoöl-, Haselnussöl-, Sonnenblumenöl- und Kokosnussöl-Bestandteilen oder eine Mischung davon ist.

14. Diätschokoladenzusammensetzung nach einem der vorangehenden Ansprüche, weiterhin bevorzugt umfassend Lecithin als einen Emulgator.

15. Diätschokoladenzusammensetzung nach einem der vorangehenden Ansprüche, weiterhin bevorzugt umfassend Vanille als ein Aroma.

16. Diätschokoladenzusammensetzung nach einem der vorangehenden Ansprüche, **dadurch gekennzeichnet, dass** die Schokoladenzusammensetzung in cremigen, milchigen, bitteren oder gefüllten Formen ist.

17. Diätschokoladenzusammensetzung nach einem der vorangehenden Ansprüche, umfassend nur die folgenden Inhaltsstoffe:
- 8-24 Gew.% Erythrol,
- 21-63 Gew.% Inulin,
- 3-21 Gew.% Fruktose, und
- 5-40 Gew.% Haselnusspüree.

18. Verfahren zum Herstellen einer Diätschokoladenzusammensetzung nach einem der vorangehenden Ansprüche, umfassend die Schritte:
- Mischen von Erythrol, 1-40 Gew.% Fruktose und Inulin,
- Zugeben von Haselnusspüree in einer Menge von 1-60 Gew.% zu der Mischung und Mischen der resultierenden Mischung, und
- Zermahlen der resultierenden Mischung.

## Revendications

1. Une composition de chocolat diététique contenant de l'érythrol à raison de 1 à 40% en poids, de l'inuline à raison de 1 à 75% en poids et un mélange édulcorant à apport calorique réduit et indice glycémique faible, **caractérisée en ce qu'**elle comprend :
- 1 à 40% en poids de fructose et
- au moins un ingrédient ou un mélange d'ingrédients choisis parmi la noisette, la purée de noisettes, la farine de noisettes, en une quantité allant de 1 à 60% en poids.

2. Une composition de chocolat diététique selon la revendication 1, **caractérisée en ce que** le rapport des noisettes sur le mélange d'érythrol, d'inuline et de fructose est compris entre 60:1 et 1:60.

3. Une composition de chocolat diététique selon l'une ou l'autre des revendications précédentes, **caractérisée en ce que** l'érythrol est présent en une quantité allant de 5 à 40% en poids.

4. Une composition de chocolat diététique selon l'une ou l'autre des revendications précédentes, **caractérisée en ce que** l'érythrol est présent en une quantité allant de 8 à 24% en poids.

5. Une composition de chocolat diététique selon l'une ou l'autre des revendications précédentes, **caractérisée en ce que** l'inuline est présente en une quantité allant de 5 à 63% en poids.

6. Une composition de chocolat diététique selon l'une ou l'autre des revendications précédentes, **caractérisée en ce que** l'inuline est présente en une quantité allant de 21 à 40% en poids.

7. Une composition de chocolat diététique selon l'une ou l'autre des revendications précédentes, **caractérisée en ce que** le fructose est présent en une quantité allant de 2 à 35% en poids.

8. Une composition de chocolat diététique selon l'une ou l'autre des revendications précédentes, **caractérisée en ce que** le fructose est présent en une quantité allant de 3 à 21% en poids.

9. Une composition de chocolat diététique selon l'une ou l'autre des revendications précédentes, **caractérisée en ce qu'**elle comprend du fructose et de l'inuline dans un rapport allant de 10:1 à 1:10 (fructose : inuline).

10. Une composition de chocolat diététique selon l'une ou l'autre des revendications précédentes, comprenant en outre de préférence au moins un ingrédient ou un mélange d'ingrédients choisis parmi le cacao, l'huile de cacao et la liqueur de cacao, en une quantité allant de 5 à 20% en poids.

11. Une composition de chocolat diététique selon l'une ou l'autre des revendications précédentes, comprenant de préférence en outre au moins un produit laitier sec ou un mélange de produits laitiers secs dans une quantité allant de 2 à 30% en poids.

12. Une composition de chocolat diététique selon l'une ou l'autre des revendications précédentes, comprenant de préférence en outre une huile vétégale.

13. Une composition de chocolat diététique selon les revendications 1 et 5, dans laquelle ladite huile est au moins un composant ou un mélange de composants choisis parmi l'huile de cacao, l'huile de noisette, l'huile de tournesol et l'huile de noix de coco.

14. Une composition de chocolat diététique selon l'une ou l'autre des revendications précédentes, comprenant de préférence en outre de la lécithine en tant qu'agent émulsifiant.

15. Une composition de chocolat diététique selon l'une ou l'autre des revendications précédentes, comprenant de préférence en outre de la vanille en tant qu'arôme.

16. Une composition de chocolat diététique selon l'une ou l'autre des revendications précédentes, **caractérisée en ce qu'**elle est sous forme crémeuse, laiteuse, amère ou remplie.

17. Composition de chocolat diététique selon l'une ou l'autre des revendications précédentes, comprenant seulement ce qui suit :
- de l'érythrol à raison de 8 à 24% en poids,
- de l'inuline à raison de 21 à 63% en poids,
- du fructose à raison de 3 à 21% en poids et
- de la purée de noisettes à raison de 5 à 40% en poids.

18. Un procédé de préparation d'une composition de chocolat diététique selon l'une ou l'autre des revendications précédentes, comprenant les étapes consistant à :
- mélanger de l'érythrol, du fructose, à raison de 1 à 40% en poids, et de l'inuline,
- ajouter de la purée de noisettes, en une quantité allant de 1 à 60% en poids, au mélange puis à remuer le mélange obtenu, et
- broyer le mélange obtenu.
